# EUROPÄISCHE PATENTSCHRIFT

(11) **EP 3 470 300 B1**
(45) Veröffentlichungstag und Bekanntmachung des Hinweises auf die Patenterteilung: **21.10.2020**
(21) Anmeldenummer: 18192750.0
(22) Anmeldetag: 05.09.2018
(51) Int. Cl.: B62D 1/22, B62D 5/09, B62D 5/093

(54) **HYDRAULISCHE LENKEINRICHTUNG**
HYDRAULIC STEERING DEVICE
DISPOSITIF DE DIRECTION HYDRAULIQUE

(30) Priorität: 12.10.2017 DE 102017123767
(43) Veröffentlichungstag der Anmeldung: 17.04.2019
(73) Patentinhaber: Danfoss Power Solutions Parchim GmbH, 19370 Parchim (DE)
(72) Erfinder: Bergmann, Erhard, 19079 Banzkow / OT Mirow (DE); Käckenmeister, Toralf, 19374 Raduhn (DE); de la Motte, Markus, 19300 Muchow (DE)
(74) Vertreter: Gulde & Partner

(56) Entgegenhaltungen:
- WO-A1-2017/153223
- DE-A1-102011 016 591
- DE-A1-102016 003 481
- DE-B3-102015 121 328

## Beschreibung

Die Erfindung betrifft eine hydraulische Lenkeinrichtung.

Hydraulische Lenkeinrichtungen, beispielsweise im Fahrzeugbereich, sind dem Fachmann grundlegend bekannt. Eine solche hydraulische Lenkeinrichtung wird in der gattungsbildenden DE 10 2015 121 328 B3 beschrieben.

Kernbestandteil derartiger hydraulischer Lenkeinrichtungen ist ein Lenkzylinder, der mit einer Versorgungsanlage hydraulisch verbunden ist. Die Versorgungsanlage ist dabei mit dem Lenkzylinder über ein Lenkaggregat im Sinne einer Hauptstromverbindung hydraulisch wirkverbindbar. Über das Lenkaggregat kann der Lenkzylinder beispielsweise über ein Handlenkrad angesteuert werden. Ferner ist bei hydraulischen Lenkeinrichtungen bekannt, zur mechanisierten oder automatischen Ansteuerung des Lenkzylinders eine Nebenstromverbindung auszubilden. Die Versorgungsanlage wird hierzu mit dem Lenkzylinder über eine Stromregelventilanordnung, vorbei an der Hauptstromverbindung, flexibel hydraulisch wirkverbunden. Die Stromregelventilanordnung kann hierzu mehrere unabhängig ansteuerbare Ventile umfassen, mit denen Vor- und Rückläufe zu Arbeitskammern des Lenkzylinders eingestellt werden können. Über ein Steuergerät mit einer Lenkungssoftware können die Ventile bekannterweise zur Realisierung einer Lenkungsfunktion angesteuert werden.

Es ist ferner bekannt, der Stromregelventilanordnung ein Freigabe- und Abschaltventil zuzuordnen. Dieses Freigabe- und Abschaltventil ist im Stand der Technik zwischen der Stromregelventilanordnung und der Versorgungsanlage geschaltet.

DE 10 2016 003 481 A1 offenbart ein Verfahren zur Funktionsüberprüfung eines elektrohydraulischen Lenksystems. Hierzu ist zwischen einem Hauptventil und einem Lenkzylinder ein Absperrventil geschaltet, das im Fehlerfall das Hauptventil hydraulisch von dem Lenkzylinder trennt.

Der Erfindung liegt die Aufgabe zugrunde, eine gattungsgemäße hydraulische Lenkeinrichtung zu schaffen, bei der sich Druckverluste reduzieren lassen.

Erfindungsgemäß wird diese Aufgabe durch eine hydraulische Lenkeinrichtung mit den in Anspruch 1 genannten Merkmalen gelöst. Dadurch, dass das Freigabe- und Abschaltventil zwischen der Stromregelventilanordnung und dem Lenkzylinder geschaltet ist, ist vorteilhaft möglich, Druckverluste an der hydraulischen Lenkeinrichtung zu reduzieren. Dies hat den Vorteil, dass eine hydraulische Fördereinrichtung der Versorgungsanlage nicht gegen einen Druck arbeiten muss. Insbesondere in dem Fall, wenn keine Lenkanforderung an die hydraulische Lenkeinrichtung besteht, kann eine Kompensation des Lastdruckes erfolgen.

Erfindungsgemäß ist ferner vorgesehen, dass bei nicht angeforderter Lenkbewegung das Freigabe- und Abschaltventil in Schließstellung ist und die Ventile der Stromregelventilanordnung die mit einem Rücklaufanschluss der Lenkeinrichtung verbunden sind, in Offenstellung sind. Hierdurch kann in besonders einfacher Weise eine Kompensation des Lastdruckes erfolgen. Die Zylindereinspannung des Lenkzylinders entsprechend der gerade gewählten Lenkstellung bleibt beibehalten und die Stromregelventilanordnung wird gleichzeitig entlastet.

Hierdurch wird weiterhin vorteilhaft möglich, die Ventile der Stromregelventilanordnung so zu optimieren, dass diese hinsichtlich eines größeren Durchflusses ausgelegt werden können. Dadurch, dass die internen Druckverluste in der hydraulischen Lenkeinrichtung reduziert sind, kann diese größere Ölmenge bereitgestellt werden.

Weitere bevorzugte Ausgestaltungen der Erfindung ergeben sich aus den übrigen, in den Unteransprüchen genannten Merkmalen.

Die Erfindung wird nachfolgend anhand eines Ausführungsbeispiels und der dazugehörigen Zeichnung näher erläutert. Hierzu zeigt:

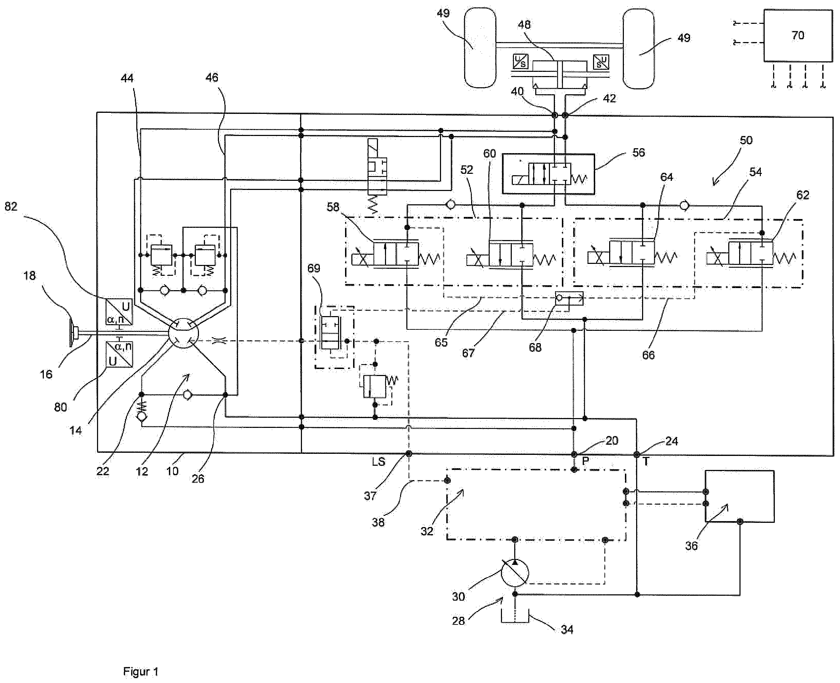

- Figur 1: eine prinziphafte Darstellung einer erfindungsgemäßen hydraulischen Lenkeinrichtung.

Figur 1 zeigt eine prinziphafte Darstellung einer hydraulischen Lenkeinrichtung. Die hydraulische Lenkeinrichtung 10 umfasst ein Lenkventil 12 mit einer drehschiebergesteuerten Dosierpumpe 14, die über ein Lenkgestänge 16 mit einem Handlenkrad 18 verbunden ist.

Die Lenkeinrichtung 10 besitzt einen Zulaufanschluss 20, der mit einem ersten Eingang 22 des Lenkventils 12 verbunden ist. Die Lenkeinrichtung 10 weist ferner einen Rücklaufanschluss 24 auf, der mit einem Ablauf 26 des Lenkventiles 12 verbunden ist.

An den Zulaufanschluss 20 beziehungsweise Rücklaufanschluss 24 ist eine insgesamt mit 28 bezeichnete Versorgungsanlage angeschlossen. Die Versorgungsanlage 28 umfasst eine Versorgungspumpe 30, die über ein Stromteilventil 32 mit dem Zulaufanschluss 20 verbunden ist. Ferner ist ein Tank 34 vorgesehen, der mit dem Rücklaufanschluss 24 verbunden ist. Das Stromteilventil 32 bildet ein Prioritätsventil, mittels dem ein Versorgungsbetrieb der Versorgungspumpe 30 zwischen einer Arbeitshydraulik 36 und der Lenkeinrichtung 10 gesteuert werden kann.

Über einen Lastanschluss 37 und eine Steuerleitung 38 erhält das Stromteilventil 32 bei Anforderung durch die hydraulische Lenkeinrichtung 10 ein Signal, das der hydraulischen Lenkeinrichtung 10 Priorität vor der Arbeitshydraulik 36 zuordnet.

Die Lenkeinrichtung 10 weist ferner Zylinderanschlüsse 40 und 42 auf. Der Zylinderanschluss 40 ist über eine Leitung 44 und der Zylinderanschluss 42 über eine Leitung 46 mit dem Lenkventil 12 verbunden. An die Zylinderanschlüsse 40 und 42 ist ein Lenkzylinder 48 angeschlossen, der in nicht dargestellter Weise mit lenkbaren Rädern 49 eines Fahrzeuges verbunden ist. Der Anschluss 40 ist mit einer für die Lenkrichtung links und der Anschluss 42 mit einer für die Lenkrichtung rechts zuständigen Kammer des Lenkzylinders 48 verbunden.

Somit bildet sich von der Versorgungspumpe 30 über das Stromteilventil 32 das Lenkventil 12 zum Lenkzylinder 48 und vom Lenkzylinder 48 zurück über das Lenkventil 12 und den Tank 34 eine Hauptstromverbindung aus.

Die Lenkeinrichtung 10 umfasst ferner eine Stromregelventilanordnung 50.

Die Stromregelventilanordnung 50 besitzt eine erste Ventilgruppe 52 und eine zweite Ventilgruppe 54 sowie ein Freigabe-Abschaltventil 56. Die Ventilgruppe 52 umfasst ein als Zulaufventil ausgebildetes Ventil 58 und ein als Rücklaufventil ausgebildetes Ventil 60. Die Ventilgruppe 54 umfasst ein als Zulaufventil ausgebildetes Ventil 62 und ein als Rücklaufventil ausgebildetes Ventil 64. Die Ventile 58, 60, 62 und 64 sind jeweils als dem Fachmann bekannte Proportionalventile ausgebildet. Bei solchen Proportionalventilen wird bei unbetätigtem Magneten ein Steuerkolben durch eine Druckfeder in einer Ausgangsstellung gehalten und sperrt den Volumenstrom. Durch die Erregung des Magneten wird der Steuerkolben direkt - proportional dem elektrischen Eingangssignal - verstellt. Die Ventile 58 und 60 sind mit dem Zylinderanschluss 40 und die Ventile 62 und 64 mit dem Zylinderanschluss 42 über das Freigabeventil 56 verbunden, beziehungsweise verbindbar. Die Stromregelventilanaordnung 50 enthält weiterhin ein Wechselventil 68, das über Lastsignalleitungen 65 und 66 mit dem Ablauf der Ventile 58 und 62 verbunden ist. Das Wechselventil 68 ist ebenfalls über eine Lastsignalleitung 67 mit einem Kopierventil 69 verbunden. Das Drucksignal am Ausgang der Ventile 58 und 62 kann dadurch auf das Kopierventil 69 und über die Steuerleitung 38 auf die Vesorgungspumpe 30 übertragen werden.

Somit bildet sich von der Versorgungspumpe 30 über die Stromregelventilanordnung 50 zum Lenkzylinder 48 und vom Lenkzylinder 48 zurück über die Stromregelventilanordnung 50 und den Tank 34 eine Nebenstromverbindung aus.

Der Lenkzylinder 48 ist also über das Lenkventil 12 mit der Versorgungsanlage 28 über eine Hauptstromverbindung und über die Stromregelventilanordnung 50 über eine die Hauptstromverbindung umgehende Nebenstromverbindung hydraulisch wirkverbunden. Zur Ansteuerung sind die als Proportionalventile ausgeführten Ventile 58, 60, 62 und 64 und das Freigabeventil 56 über nicht dargestellte Steuerleitungen mit einem Steuergerät 70 verbunden.

Wird nun über das Steuergerät 70 das Freigabe-Abschaltventil 56 von seiner dargestellten Sperrstellung in Durchlassstellung geschaltet, wird der Zylinderanschluss 40 mit den Ventilen 58 und 60 und der Zylinderanschluss 42 mit den Ventilen 62 und 64 verbunden. Das Steuergerät 70 bewertet die von Messwertaufnehmern 82 beziehungsweise 80 gelieferten Signale, die der gewünschten Lenkrichtung entsprechen und stellt entsprechende Ansteuersignale über die Steuerleitungen für die Ventile 58, 60, 62 beziehungsweise 64 bereit. Je nach dem, ob über das Lenkventil 12, also über das Handlenkrad 18, ein Linkslenkvorgang oder ein Rechtslenkvorgang erfolgt, wird über das Steuergerät 70 entweder das Ventil 58 und das Ventil 64 bei Linkslenkung oder das Ventil 60 und das Ventil 62 bei Rechtslenkung angesteuert. Hierdurch stellt sich ein definierter Öffnungsquerschnitt ein, der einen zum Hauptölstrom proportionalen Nebenölstrom liefert. Der Volumenstrom des Nebenölstroms ist anhängig von der an dem jeweiligen Ventil 58, 60, 62, 64 anliegenden Druckdifferenz sowie dem Öffnungsquerschnitt entsprechend dem vom Steuergerät 70 anliegenden Steuersignalen.

Findet keine Lenkbewegung statt, dass heißt von den Messwertaufnehmer 80 und 82 kommen keine entsprechenden Signale an das Steuergerät 70, wird das Freigabeventil 56 geschlossen. Gleichzeitig werden die Ventile 60 und 64 geöffnet. Hierdurch findet eine Kompensation des Lastdruckes bei Beibehaltung der Zylinderstellung des Lenkzylinders 48 statt. Die Ventile 58, 60, 62 und 64 und die Lastsignalleitungen 65, 66 und 67 zum Wechselventil 68 und zum Kopierventil 69 werden somit entlastet. Da die Pumpe 30 nicht mehr gegen den in den Zylindern eingespannten Druck von beispielsweise 30 bar arbeiten muss, können Druckverluste reduziert werden. Wegen der geringen Druckverluste vom Zulaufanschluss 20 zu den Ventilen 58 und 62 wird es so möglich, die Durchflussmenge an Öl durch diese Ventile zu erhöhen, beispielsweise auf 60 l/min. Die Lenkunterstützung kann hiermit verbessert werden.

### Bezugszeichen

- 10: Lenkeinrichtung
- 12: Lenkventil
- 14: Dosierpumpe
- 16: Lenkgestänge
- 18: Handlenkrad
- 20: Zulaufanschluss
- 22: Eingang
- 24: Rücklaufanschluss
- 26: Ablauf
- 28: Versorgungsanlage
- 30: Versorgungspumpe
- 32: Stromteilventil
- 34: Tank
- 36: Arbeitshydraulik
- 37: Lastanschluss
- 38: Steuerleitung
- 40: Zylinderanschluss
- 42: Zylinderanschluss
- 44: Leitung
- 46: Leitung
- 48: Lenkzylinder
- 50: Stromregelventilanordnung
- 52: Ventilgruppe
- 54: Ventilgruppe
- 56: Freigabe-Abschaltventil
- 58: Ventil
- 60: Ventil
- 62: Ventil
- 64: Ventil
- 65: Lastsignalleitung
- 66: Lastsignalleitung
- 67: Lastsignalleitung
- 68: Wechselventil
- 69: Kopierventil
- 70: Steuergerät
- 80: Messwertaufnehmer
- 82: Messwertaufnehmer

## Patentansprüche

1. Hydraulische Lenkeinrichtung, die einen Lenkzylinder (48) mit einer Versorgungsanlage (28) hydraulisch verbindet, wobei die Versorgungsanlage (28) mit dem Lenkzylinder (48) über ein Lenkventil (12) zur Ausbildung einer Hauptstromverbindung hydraulisch wirkverbindbar ist und die Versorgungsanlage (28) mit dem Lenkzylinder (48) über eine Stromregelventilanordnung (50) zur Ausbildung einer, die Hauptstromverbindung umgehenden Nebenstromverbindung hydraulisch wirkverbindbar ist, wobei die Stromregelventilanordnung (50) durch ein elektrisches Steuergerät (70) ansteuerbar ist und die Stromregelventilanordnung (50) einzeln ansteuerbare Ventilgruppen (52, 54) umfasst, die jeweils in den Vorlauf und Rücklauf der Nebenstromverbindung geschaltet sind und der Stromregelventilanordnung (50) ein Freigabe-Abschaltventil (56) zugeordnet ist,
**dadurch gekennzeichnet, dass**
das Freigabe-Abschaltventil (56) zwischen der Stromregelventilanordnung (50) und dem Lenkzylinder (48) geschaltet ist und die Ventilgruppe (52) ein mit einem Zulaufanschluss (20) verbindbares Ventil (58) und ein mit einem Rücklaufanschluss (24) verbindbares Ventil (60) sowie die Ventilgruppe (54) ein mit dem Zulaufanschluss (20) verbindbares Ventil (62) und ein mit dem Rücklaufanschluss (24) verbindbares Ventil (64) umfasst und bei nicht angeforderter Lenkbewegung das Freigabe- und Abschaltventil (56) in Schließstellung ist und die Ventile (60, 64) in Offenstellung sind.

2. Hydraulische Lenkeinrichtung nach einem der vorhergehenden Ansprüche,
**dadurch gekennzeichnet, dass**
bei in Durchlassstellung geschalteten Freigabe- und Abschaltventil (56) ein für die Linkslenkung zugeordneter Zylinderanschluss (40) mit den Ventilen (58, 60) und einen für die Rechtslenkung zugeordneter Zylinderanschluss (42) mit den Ventilen (62, 64) verbunden ist.

## Claims

1. A hydraulic steering device hydraulically connecting a steering cylinder (48) to a supply system (28), wherein the supply system (28) is hydraulically operatively connectible to the steering cylinder (48) via a steering valve (12) to form a main flow connection and the supply system (28) is hydraulically operatively connectible to the steering cylinder (48) via a flow control valve arrangement (50) to form a secondary flow connection circumventing the main flow connection, wherein the flow control valve arrangement (50) is controllable by means of an electrical control apparatus (70) and the flow control valve arrangement (50) comprises individually controllable valve groups (52, 54) which are each connected into the feed line and the return line of the secondary flow connection and the flow control valve arrangement (50) is associated with a release and shutoff valve (56),
**characterized in that**
the release and shutoff valve (56) is connected between the flow control valve arrangement (50) and the steering cylinder (48) and **in that** the valve group (52) comprises a valve (58) connectible to a feed line port (20) and a valve (60) connectible to a return line port (24) and the valve group (54) comprises a valve (62) connectible to the feed line port (20) and a valve (64) connectible to the return line port (24) and **in that**, if no steering motion is requested, the release and shutoff valve (56) is in a closed position and the valves (60, 64) are in an open position.

2. The hydraulic steering device according to any one of the preceding claims,
**characterized in that**
when the release and shutoff valve (56) is in a pass-through position, a cylinder port (40) associated with left-hand steering is connected to the valves (58, 60) and a cylinder port (42) associated with right-hand steering is connected to the valves (62, 64).

## Revendications

1. Dispositif de direction hydraulique, qui relie un vérin de direction (48) à une installation d'alimentation (28) par voie hydraulique, dans lequel l'installation d'alimentation (28) peut être reliée de façon fonctionnelle par voie hydraulique au vérin de direction (48) au moyen d'une vanne de direction (12) pour former une liaison d'écoulement principale et l'installation d'alimentation (28) peut être reliée de façon fonctionnelle par voie hydraulique au vérin de direction (48) au moyen d'un ensemble de vannes de régulation de débit (50) pour former une liaison d'écoulement secondaire contournant la liaison d'écoulement principale, dans lequel l'ensemble de vannes de régulation de débit (50) peut être activé par un appareil de commande électrique (70) et l'ensemble de vannes de régulation de débit (50) comprend des groupes de vannes (52, 54) pouvant être activés séparément, qui sont montés respectivement dans la conduite d'alimentation et dans la conduite de retour de la liaison d'écoulement secondaire et une vanne de libération et d'arrêt (56) est associée à l'ensemble de vannes de régulation de débit (50),
**caractérisé en ce que**
la vanne de libération et d'arrêt (56) est montée entre l'ensemble de vannes de régulation de débit (50) et le vérin de direction (48) et que le groupe de vannes (52) comprend une vanne (58) pouvant être reliée à un raccord d'alimentation (20) et une vanne (60) pouvant être reliée à un raccord de retour (24) et que le groupe de vannes (54) comprend une vanne (62) pouvant être reliée au raccord d'alimentation (20) et une vanne (64) pouvant être reliée au raccord de retour (24) et que la vanne de libération et d'arrêt (56) se trouve en position fermée et les vannes (60, 64) sont en position ouverte lorsqu'un mouvement de direction n'est pas sollicité.

2. Dispositif de direction hydraulique selon l'une des revendications précédentes,
**caractérisé en ce**
**qu'**un raccord de vérin (40) associé pour la direction à gauche est relié aux vannes (58, 60) et qu'un raccord de vérin (42) associé pour la direction à droite est relié aux vannes (62, 64) lorsque la vanne de libération et d'arrêt (56) est commutée en position de passage.
